# EUROPEAN PATENT APPLICATION

(11) **EP 3 822 003 A1**
(43) Date of publication of application: **19.05.2021**
(21) Application number: 19833388.2
(22) Date of filing: 06.05.2019
(51) Int. Cl.: B22F 3/105, B24B 27/00, B33Y 30/00

(54) **ADDITIVE AND SUBTRACTIVE COMPOSITE MANUFACTURING DEVICE AND METHOD**

(30) Priority: 11.07.2018 CN 201810759334
(71) Applicant: National Institute Corporation of Addative Manufacturing, Xi'an, Shaanxi 710119 (CN)
(72) Inventor: XUE, Fei, Xi'an, Shaanxi 710119 (CN); LU, Bingheng, Xi'an, Shaanxi 710119 (CN); ZHOU, Yufei, Xi'an, Shaanxi 710119 (CN); GAO, Jie, Xi'an, Shaanxi 710119 (CN); ZHANG, Lijuan, Xi'an, Shaanxi 710119 (CN); WANG, Lei, Xi'an, Shaanxi 710119 (CN)
(74) Representative: Cabinet Beau de Loménie
(86) International application number: PCT/CN2019/085717
(87) International publication number: WO 2020/010908

(57) **Abstract**

The invention relates to an additive and subtractive hybrid manufacturing device and method. According to the invention, by separating an additive area from a subtractive area through a workpiece switching area, it is ensured that the additive atmosphere environment and the subtractive atmosphere environment do not interfere with each other; and the workpiece switching area allows automatic switching of workpieces, which not only improves the processing efficiency of the device, but also avoids the adverse effects of workpiece switching on the atmosphere environment of an additive unit and improves the process stability of additive manufacturing. The device mainly structurally includes the additive area, the subtractive area and the workpiece switching area; the additive area includes a first sealing cabin, a first atmosphere adjusting system and an additive unit arranged in the first sealing cabin and used for performing additive processing on workpieces; the subtractive area includes a subtractive unit for performing subtractive processing on the workpieces; the subtractive unit is located in an air environment; and the workpiece switching area includes a second sealing cabin, a second atmosphere adjusting system and a pallet type exchange table arranged in the second sealing cabin and used for transferring the workpieces between the additive unit and the subtractive unit.

## Description

### TECHNICAL FIELD

The present invention belongs to the field of additive manufacturing, and particularly relates to an additive and subtractive hybrid manufacturing device and method.

### BACKGROUND

An additive manufacturing technology is to form a three-dimensional entity by orderly accumulation of materials. Because of its advantages such as high material utilization rate and integrated forming of complex parts, the additive manufacturing technology, especially the metal additive manufacturing technology, has entered the industrial application stage in the fields of aerospace, nuclear energy, ocean engineering, automobile engineering, etc.

However, the metal additive manufacturing technology mainly takes a molten pool of high-temperature liquid metal (such as laser metal deposition technology and arc additive manufacturing technology) as a "basic point", and has a process from point to line, to surface and then to an entity, which results in low dimensional accuracy and surface quality of formed parts inevitable.

A currently proposed additive and subtractive hybrid manufacturing method combines the advantages of both, so as to form various complex structures, and ensure the surface quality and dimensional accuracy of products.

However, the additive and subtractive functions of existing additive and subtractive hybrid manufacturing devices are completed at the same station, which has the following problems: for easily oxidized materials, such as titanium alloy and high-temperature alloy, the high-purity inert atmosphere with low water and low oxygen directly affects the material properties of parts obtained by additive manufacturing. When a blank for additive manufacturing is subtracted, in order to ensure surface quality, cutting fluid is often used to cool a cutting tool and a machined surface. However, the water content of the cutting fluid is high, the use of the cutting fluid destroys the inert atmosphere of additive manufacturing, and it takes a long time to reconstruct the atmosphere, thus resulting in low production efficiency.

### SUMMARY

The purpose of the present invention is to provide an additive and subtractive hybrid manufacturing device for solving the problems in the prior art. By conducting an additive process and a subtractive process in different areas, it is ensured that an additive atmosphere environment and a subtractive atmosphere environment do not interfere with each other. A workpiece switching area allows automatic switching of workpieces, which not only improves the processing efficiency of the device, but also avoids the adverse effects of workpiece switching on the atmosphere environment of an additive unit and improves the additive manufacturing process stability.

The specific technical solution of the present invention is as follows.

The present invention provides an additive and subtractive hybrid manufacturing device, comprising an additive area, a subtractive area and a workpiece switching area;
the additive area comprises a first sealing cabin, a first atmosphere adjusting system and an additive unit arranged in the first sealing cabin and used for performing additive processing on workpieces;
the subtractive area comprises a subtractive unit for performing subtractive processing on workpieces, and the subtractive unit is located in an air environment;
the workpiece switching area comprises a second sealing cabin, a second atmosphere adjusting system and a pallet type exchange table arranged in the second sealing cabin and used for transferring the workpieces between the additive unit and the subtractive unit;
the first atmosphere adjusting system is used for maintaining an inert gas protection environment all the time, and the second atmosphere adjusting system is used for realizing the rapid switching between the inert gas protection environment and the air environment in the second sealing cabin; and
sealing cabin doors are arranged between the first sealing cabin and the second sealing cabin, and between the second sealing cabin and the subtractive area.

Preferably, in order to shorten the establishment time of the inert atmosphere environment and further improve the working efficiency of the device, the volume of the first sealing cabin is larger than that of the second sealing cabin.

Further, in order to increase the utilization rate of the device, the device also comprises a temporary workpiece storage area, the temporary workpiece storage area comprises at least one temporary storage unit; and a sealing cabin door is arranged between the second sealing cabin and the temporary workpiece storage area.

Further, the pallet type exchange table comprises a primary translation component, a rotating component, a lifting component, a secondary translation component and a pickup component;
the primary translation component adopts gear-rack meshing transmission, in combination with a slider-guide rail pair, to realize the translation movement of the rotating component, the secondary translation component and a pallet component; specifically, the primary translation component comprises a first linear guide rail pair, a first rack, a first gear, a base and a first driving motor; the base is installed above a slider of the first linear guide rail pair, and the first rack is arranged in parallel with the first linear guide rail pair; the first driving motor is arranged on a side of the base,
the first gear is arranged at an output end of the first driving motor, and the first gear is meshed with the first rack;
the rotating component adopts gear-gear meshing transmission to realize the rotary movement of the secondary translation component and the pallet component; specifically, the rotating component comprises a thrust bearing, a rotating gear, an upper toothed disc, a lower toothed disc, an adapter flange, guide posts, a second driving motor and a second gear;
the thrust bearing is fixed above the base, and the rotating gear is installed on the thrust bearing; the lower toothed disc, the upper toothed disc and the adapter flange are sequentially arranged above the rotating gear; positioning teeth are uniformly arranged along a circumferential direction on a contacting surface of the lower toothed disc and the upper toothed disc (in fact, both the upper toothed disc and the lower toothed disc are contrate gears, and circumferential positioning accuracy is ensured through the cooperation of the two contrate gears); a plurality of guide posts are uniformly arranged along the circumferential direction, one end of each guide post is fixed on the adapter flange, and the other end of each guide post sequentially passes through the upper toothed disc, the lower toothed disc and the rotating gear and then extends outwards;
the second driving motor is arranged on a side of the base, an output end of the second driving motor is provided with the second gear, and the second gear is meshed with the rotating gear;
the lifting component adopts hydraulic cylinder-piston to realize the lifting action of the secondary translation component and the pallet component; specifically, the lifting component comprises a hydraulic cylinder and a collision block; a cavity for installing the hydraulic cylinder is formed in a center of the base, and central through holes are formed in centers of the rotating gear, the upper toothed disc and the lower toothed disc; one end of the collision block is fixed on the adapter flange, and the other end of the collision block is inserted into a central through hole of the adapter flange; the hydraulic cylinder is fixed in the cavity, and a piston rod of the hydraulic cylinder sequentially penetrates through the rotating gear, the lower toothed disc and the upper toothed disc to make contact with the collision block;
the secondary translation component comprises a guide rail bracket, a second linear guide rail pair, a ball screw pair and a third driving motor;
the guide rail bracket is fixed on the adapter flange, the second linear guide rail pair and the ball screw pair are fixed on the guide rail bracket, and the third driving motor drives the ball screw pair so as to drive a slider of the second linear guide rail pair to move; and
the pickup component comprises a clamp positioning pallet and a fork plate; and the fork plate is installed on the slider of the second linear guide rail pair, a U-shaped notch is formed in the fork plate, and the clamp positioning pallet is placed on the fork plate and located above the U-shaped notch.

Further, the first atmosphere adjusting system comprises an inert gas source, a circulation pipeline, an exhaust pipeline, a filter, a fan, a purification column, a pressure sensor, a water content sensor and an oxygen content sensor;
the pressure sensor, the water content sensor and the oxygen content sensor are installed on the first sealing cabin; the inert gas source communicates with the first sealing cabin; two ends of the circulation pipeline communicate with the first sealing cabin, and the filter, the fan and the purification column are sequentially arranged on the circulation pipeline along a gas flow direction; one end of the exhaust pipeline is connected with the first sealing cabin, and the other end of the exhaust pipeline communicates with the external environment; and
the second atmosphere adjusting system and the first atmosphere adjusting system have the same structure.

The working principle is as follows: when the inert gas environment is required, two steps are needed: first, a gas outlet/inlet of the circulation pipeline is closed, the exhaust pipeline is opened, an inert gas is injected into the first sealing cabin or the second sealing cabin by the inert gas source till data displayed by the pressure sensor, the water content sensor and the oxygen content sensor meet the standard of a primary inert gas environment, and the exhaust pipeline and the inert gas source are closed; second, the gas outlet/inlet of the circulation pipeline is opened, the fan is turned on to allow circulation of the inert gas environment in the sealing cabin, and purification is performed by the purification column till the data displayed by the pressure sensor, the water content sensor and the oxygen content sensor meet the standard of a completely inert gas environment.

When the air environment is required, the exhaust pipeline is opened to allow convective diffusion between the outside air and the inert gas in the first sealing cabin or the second sealing cabin till the data displayed by the pressure sensor, the water content sensor and the oxygen content sensor meet the standard of the required air environment.

Further, the additive unit comprises a CNC machining center, a laser cladding head, a positioning base and a positioning cone, wherein the laser cladding head is installed on a ram of the CNC machining center, the positioning base is installed on a workbench of the CNC machining center, the positioning cone is installed on the positioning base; and the laser cladding head adopts a coaxial powder feeding nozzle or inside-laser powder feeding nozzle.

Further, the subtractive unit comprises a CNC machining center, a workpiece detection head, a positioning base and a positioning cone, wherein the positioning base is installed on a workbench of the CNC machining center, the positioning cone is installed on the positioning base, and the workpiece detection head is used to detect whether a workpiece is satisfactory.

Further, the temporary storage unit comprises a support frame and a pallet component arranged above the support frame, wherein the pallet component comprises a positioning base, a positioning cone and a clamp positioning pallet, the positioning base is fixedly installed on the support frame, and the clamp positioning pallet is located above the positioning base and connected and positioned through the positioning cone.

Further, a chip removal device and a cooling device are arranged in the subtractive unit, and a powder recovering device for recovering metal powder is arranged in the additive unit.

Based on the above description of the structure of the additive and subtractive hybrid manufacturing device, an additive and subtractive hybrid manufacturing method using the device will now be described, which specifically comprises the following steps:
[1] feeding:
   placing a workpiece to be processed on the pallet component of the temporary storage unit;
[2] workpiece pickup:
   opening the sealing cabin door arranged between the second sealing cabin and the temporary workpiece storage area, picking up the workpiece to be processed from the pallet component of the temporary storage unit to the pallet type exchange table through the pallet type exchange table, and closing the sealing cabin door between the second sealing cabin and the temporary workpiece storage area;
[3] additive processing:
   [3.1] opening the sealing cabin door between the first sealing cabin and the second sealing cabin, transferring the workpiece to be processed to a workbench of the additive unit through the pallet type exchange table, and then closing the sealing cabin door between the first sealing cabin and the second sealing cabin;
   [3.2] atmosphere adjustment of the additive unit:
      introducing, by the first atmosphere adjusting system, the inert gas into the first sealing cabin and performing purification and circulation, so as to enable the first sealing cabin to be in the inert gas environment;
   [3.3] performing additive processing on the workpiece to be processed by means of the additive unit;
[4] primary atmosphere adjustment of a station switching unit:
   after the additive process, adjusting the gas environment in the second sealing cabin through the second atmosphere adjusting system to make the environment consistent with the inert gas environment in the first sealing cabin;
[5] station switching:
   opening the sealing cabin door between the first sealing cabin and the second sealing cabin, picking up the workpiece subjected to additive processing to the pallet type exchange table through the pallet type exchange table, and closing the sealing cabin door between the first sealing cabin and the second sealing cabin again;
[6] secondary atmosphere adjustment of the station switching unit:
   adjusting the environment in the second sealing cabin by the second atmosphere adjusting system to make the environment consistent with the air environment;
[7] subtractive process:
   opening the sealing cabin door between the second sealing cabin and the subtractive area, transferring the workpiece subjected to additive processing on the pallet type exchange table to a workbench of the subtractive unit through the pallet type exchange table, then closing the sealing cabin door between the second sealing cabin and the subtractive area, and performing subtractive processing on the workpiece by the subtractive unit;
[8] checking whether the workpiece is satisfactory, executing step [9] if yes, and repeating step [7] if not till the workpiece is satisfactory and then executing step [9], or executing step [10] till the workpiece is satisfactory, and then executing step [9];
[9] opening the sealing cabin door between the second sealing cabin and the subtractive area, and transferring the workpiece subjected to subtractive processing on the workbench of the subtractive unit to the pallet component of the temporary storage unit through the pallet type exchange table to complete processing;
[10] opening the sealing cabin door between the second sealing cabin and the subtractive area, transferring the workpiece subjected to subtractive processing on the workbench of the subtractive unit to the pallet type exchange table through the pallet type exchange table, and closing the sealing cabin door between the second sealing cabin and the subtractive area;
   adjusting the gas environment in the second sealing cabin again by the second atmosphere adjusting system to make the environment consistent with the inert gas environment in the first sealing cabin;
   opening the sealing cabin door between the first sealing cabin and the second sealing cabin, transferring the workpiece subjected to subtractive processing to the workbench of the additive unit, then closing the sealing cabin door between the first sealing cabin and the second sealing cabin, and performing additive processing on the workpiece by the additive unit; and
   executing the steps [4] to [7] again till the workpiece is satisfactory and then executing the step [9].

Compared with the prior art, the present invention has the following beneficial effects.
1. The additive area, the subtractive area and the workpiece switching area are isolated by arranging the sealing cabin doors, so that the additive process and the subtractive process are conducted separately without affecting each other, thus avoiding the influence of subtractive cutting fluid on the inert environment of the additive process and ensuring the quality stability of workpieces subjected to additive processing.
2. The workpiece switching area with the atmosphere adjusting systems and the pallet type exchange table is arranged, the pallet type exchange table realizes automatic switching of workpieces among the various areas, and the volume of the sealing cabin in the workpiece switching area is smaller than that in the additive area; and by adopting the atmosphere adjusting systems in the workpiece switching area, the inert atmosphere environment can be established in a shorter time, operation efficiency is improved, and the stability of the process environment in the additive area is improved.
3. The additive unit, the subtractive unit and the temporary storage unit of the present invention are all provided with the positioning bases and the positioning cones, and the clamp positioning pallet is positioned together with the positioning base of each station through the positioning cone to ensure that workpiece coordinate systems of the workpiece in different areas are consistent.
4. The pallet type exchange table of the present invention can move horizontally, vertically and rotationally, and pick up the workpiece by means of the fork plate, so as to improve the adaptability of the device and ensure the reliability of the device when processing workpieces with large volume and large mass.
5. The upper toothed disc and the lower toothed disc (two contrate gears) are adopted in the pallet type exchange table of the present invention, so as to ensure the positioning accuracy in the circumferential direction.

### BRIEF DESCRIPTION OF THE DRAWINGS

Fig. 1 is an overall principle block diagram of an additive and subtractive hybrid manufacturing device of the present invention;
Fig. 2 is an overall structural diagram of an additive and subtractive hybrid manufacturing device of the present invention with first and second sealing cabins removed;
Fig. 3 is an X-direction view of an additive unit in Fig. 2;
Fig. 4 is a Y-direction view of the additive unit in Fig. 2;
Fig. 5 is a V-direction view of a subtractive unit in Fig. 2;
Fig. 6 is a U-direction view of the subtractive unit in Fig. 2;
Fig. 7 is a 3D overall schematic diagram of a pallet type exchange table;
Fig. 8 is a top view of the pallet type exchange table;
Fig. 9 is a side view of Fig. 8;
Fig. 10 is a sectional view taken along A-A of Fig. 8;
Fig. 11 is an isometric view of a pallet component;
Fig. 12 is a front view of the pallet component; and
Fig. 13 is a structural schematic diagram of a first atmosphere adjusting system and a second atmosphere adjusting system.

### Description of reference numerals:

01-additive area, Oil-first sealing cabin, 012-first atmosphere adjusting system,
02-workpiece switching area, 021-second sealing cabin, 022-second atmosphere adjusting system, 03-subtractive area, 04-temporary workpiece storage area, 05-sealing cabin door;
1-additive unit; 101-Y-axis lathe bed; 102-positioning base; 103-Z-axis column; 104-A-axis dividing head; 105-Z-axis ram; 106-B/C-axis swing cradle; 107-laser cladding head;
2-pallet type exchange table;
21-primary translation component, 211-first linear guide rail pair, 212-first rack, 213-first gear, 214-base, 215-first driving motor;
22-rotating component, 221-thrust bearing, 222-rotating gear, 223-upper toothed disc,
224-lower toothed disc, 225-adapter flange, 226-guide post, 227-second driving motor, 228-second gear;
23-lifting component, 231-hydraulic cylinder, 232-collision block;
24-secondary translation component, 241-guide rail bracket, 242-second linear guide rail pair, 243-ball screw pair, 244-third driving motor;
25-pickup component; 251-clamp positioning pallet, 252-fork pallet; 3-subtractive unit;
301-V-axis lathe bed; 302-positioning base; 303-W-axis column; 304-W-axis ram; 305-motorized spindle; 306-E/F-axis swing cradle;
4-temporary storage unit; 41-pallet component; 411-positioning cone;
0011-inert gas source, 0012-circulation pipeline, 0013-exhaust pipeline, 0014-filter,
0015-fan, 0016-purification column, 0017-pressure sensor, 0018-water content sensor,
0019-oxygen content sensor.

### DETAILED DESCRIPTION

The present invention will be further described with reference to the attached drawings and specific embodiments.

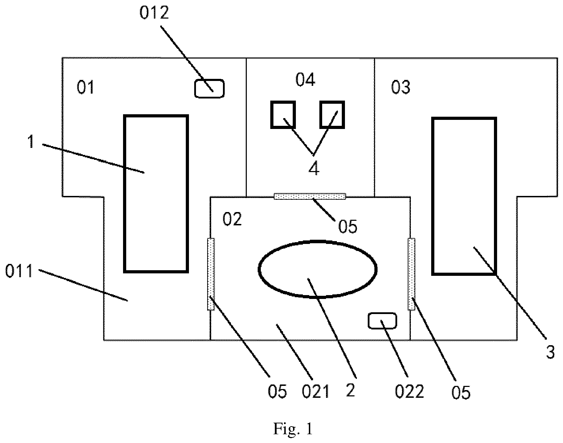

Referring to Fig. 1, an additive and subtractive hybrid manufacturing device mainly comprises an additive area 01, a subtractive area 03, a workpiece switching area 02 and a temporary workpiece storage area 04;
the additive area 01 comprises a first sealing cabin 011, a first atmosphere adjusting system 012 and an additive unit 1 arranged in the first sealing cabin and used for performing additive processing on workpieces;
the subtractive area 03 comprises a subtractive unit 3 for performing subtractive processing on the workpieces, and the subtractive unit 3 is located in an air environment;
the workpiece switching area 02 comprises a second sealing cabin 021, a second atmosphere adjusting system 022 and a pallet type exchange table 2 arranged in the second sealing cabin and used for transferring the workpieces between the additive unit 1 and the subtractive unit 3;
the first atmosphere adjusting system is used for maintaining an inert gas protection environment in the first sealing cabin 011 all the time; the second atmosphere adjusting system is used for realizing the rapid switching between an inert gas protection environment and the air environment in the second sealing cabin 021;
the temporary workpiece storage area 04 comprises at least one temporary storage unit 4; and
sealing cabin doors 05 are arranged between the first sealing cabin 011 and the second sealing cabin 021, between the second sealing cabin 021 and the subtractive area 03, and between the second sealing cabin 021 and the temporary workpiece storage area 04, and are used to isolate various areas.

The actual working process is:
[1] layout planning:
   according to (but not limited to) the layout form of the various areas, adding other areas for later use when necessary, and in order to ensure a minimum system of the hybrid manufacturing device, making a system list at least include the additive area, the subtractive area, the workpiece switching area and the temporary storage area;
[2] checking:
   completing the layout of the device according to layout planning requirements, verifying the completeness of parts in each area according to the system list in the previous step, and performing checking to ensure that all areas meet air tightness requirements;
[3] workpiece processing:
   [3.1] feeding:
      placing a workpiece to be processed on a pallet component of the temporary storage unit 4;
   [3.2] workpiece pickup:
      opening the sealing cabin door 05 arranged between the second sealing cabin 021 and the temporary workpiece storage area 04, picking up the workpiece to be processed from the pallet component of the temporary storage unit 4 to the pallet type exchange table 2 through the pallet type exchange table 2, and closing the sealing cabin door 05 between the second sealing cabin 021 and the temporary workpiece storage area 04;
   [3.3] additive processing:
      [3.3.1] opening the sealing cabin door 05 between the first sealing cabin 011 and the second sealing cabin 021, transferring the workpiece to be processed to a workbench of the additive unit 1 through the pallet type exchange table 2, and then closing the sealing cabin door 05 between the first sealing cabin 011 and the second sealing cabin 021;
      [3.3.2] atmosphere adjustment of the additive unit:
         introducing, by the first atmosphere adjusting system, inert gas into the first sealing cabin 011 and performing purification and circulation, so as to enable the first sealing cabin 011 to be in the inert gas environment;
      [3.3.3] performing additive processing on the workpiece to be processed by means of the additive unit 1;
   [3.4] primary atmosphere adjustment of the workpiece switching area;
      after the additive process, adjusting the gas environment in the second sealing cabin 021 through the second atmosphere adjusting system to make the environment consistent with the inert gas environment in the first sealing cabin 011;
   [3.5] station switching:
      opening the sealing cabin door 05 between the first sealing cabin 011 and the second sealing cabin 021, picking up the workpiece subjected to additive processing to the pallet type exchange table 2 through the pallet type exchange table 2, and closing the sealing cabin door 05 between the first sealing cabin 011 and the second sealing cabin 021 again;
   [3.6] secondary atmosphere adjustment of the workpiece switching area:
      adjusting the environment in the second sealing cabin 021 by the second atmosphere adjusting system to make the environment consistent with the air environment;
   [3.7] subtractive process:
      opening the sealing cabin door 05 between the second sealing cabin 021 and the subtractive area 03, transferring the workpiece subjected to additive processing on the pallet type exchange table 2 to a workbench of the subtractive unit 3 through the pallet type exchange table 2, then closing the sealing cabin door between the second sealing cabin 021 and the subtractive area 03, and performing subtractive processing on the workpiece by the subtractive unit 3;
   [3.8] checking whether the workpiece is satisfactory, executing step [3.9] if yes, and repeating the step [3.7] if not till the workpiece is satisfactory and then executing step [3.9], or executing step [3.10] till the workpiece is satisfactory and then executing step [3.9];
   [3.9] opening the sealing cabin door 05 between the second sealing cabin 021 and the subtractive area 03, and transferring the workpiece subjected to subtractive processing on the workbench of the subtractive unit 3 to the pallet component of the temporary storage unit 4 through the pallet type exchange table 2 to complete processing;
   [3.10] opening the sealing cabin door 05 between the second sealing cabin 021 and the subtractive area 03, transferring the workpiece subjected to subtractive processing on the workbench of the subtractive unit 3 to the pallet type exchange table 2 through the pallet type exchange table 2, and closing the sealing cabin door 05 between the second sealing cabin 021 and the subtractive area 03;
      adjusting the gas environment in the second sealing cabin 021 again by the second atmosphere adjusting system to make the environment consistent with the inert gas environment in the first sealing cabin 011;
      opening the sealing cabin door 05 between the first sealing cabin 011 and the second sealing cabin 021, transferring the workpiece subjected to subtractive processing to the workbench of the additive unit, then closing the sealing cabin door 05 between the first sealing cabin 011 and the second sealing cabin 021, and performing additive processing on the workpiece by the additive unit 1; and
      executing the steps [3.4] to [3.7] again till the workpiece is satisfactory and then executing the step [3.9].

The specific structure of each component in the above basic scheme is as follows.

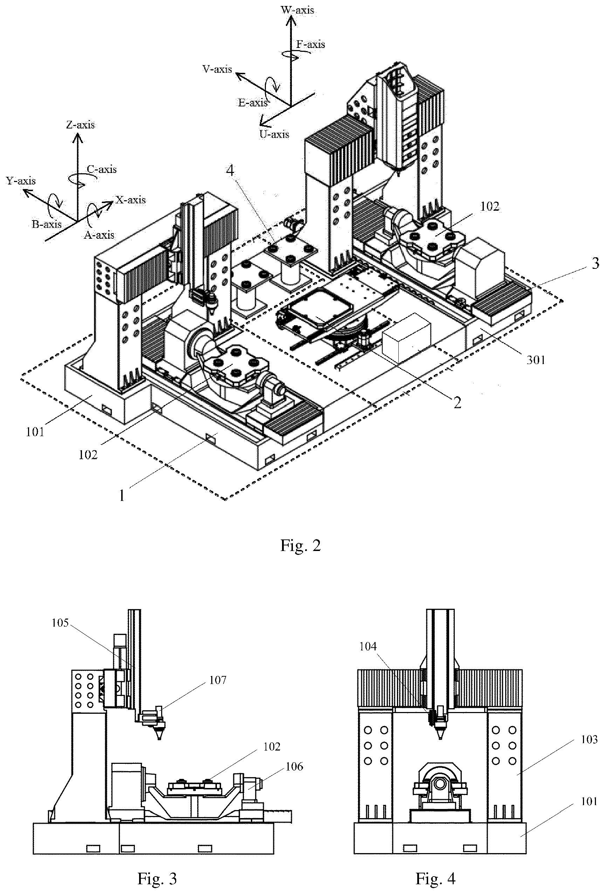

The additive unit 1 comprises a CNC machining center (the CNC machining center is generally a cradle machining center, and this embodiment adopts a six-axis cradle machining center), a laser cladding head and a positioning base, and the specific structure is shown in Fig. 2, Fig. 3 and Fig. 4: Y-axis lathe bed 101, Z-axis column 103, A-axis dividing head 104, Z-axis ram 105, B/C-axis swing cradle 106, positioning base 102 and laser cladding head 107 (in addition, the additive unit 1 is provided with a powder recovering device for recovering metal powder, and the laser cladding head 107 adopts a coaxial powder feeding nozzle or inside-laser powder feeding nozzle);
wherein the positioning base 102 is fixed on the B/C-axis swing cradle 106, and the B/C-axis swing cradle 106 is installed above a guide rail of the Y-axis lathe bed 101 and moves back and forth in a horizontal direction; an X-axis guide rail is installed on a beam of the Z-axis column 103, the Z-axis ram can move left and right in the horizontal direction along the X-axis guide rail, and the A-axis dividing head 104 is installed on the Z-axis ram 105; the laser cladding head 107 is fixed on the A-axis dividing head 104 (when the CNC machining center is a five-axis cradle machining center, that is, when the A-axis dividing head 104 is not installed, the laser cladding head is directly installed on the Z-axis ram 105), an axis of the laser cladding head 107 is perpendicular to an axis of the A-axis dividing head 104, and the laser cladding head 107 can swing around a direction A with the A-axis dividing head to realize scale division; and finally, additive accumulation is performed through X-axis, Y-axis, Z-axis, A-axis, B-axis and C-axis coordination.

The subtractive unit 3 comprises a CNC machining center (the CNC machining center is generally a cradle machining center, and in this embodiment, a five-axis cradle machining center is adopted, which is provided with a chip removal device, a cooling device and a tool magazine), a positioning base and a workpiece detection head installed in the tool magazine, the workpiece detection head and a tool can be automatically switched, and the specific structure is shown in Fig. 2, Fig. 5 and Fig. 6: the subtractive unit 3 comprises a V-axis lathe bed 301, a W-axis column 303, a W-axis ram 304, a motorized spindle 305, an E/F-axis swing cradle 306 and a positioning base 102;
wherein the positioning base 102 is fixed on the E/F-axis swing cradle 306, the E/F-axis swing cradle 306 is installed above a guide rail of the V-axis lathe bed 301 and moves back and forth in the horizontal direction, a U-axis guide rail is installed on a beam of the W-axis column 303, the W-axis ram 304 can move left and right in the horizontal direction along the U-axis guide rail, and the motorized spindle 305 is installed on the W-axis ram 304 in a vertically downward direction; and finally, the finishing and trimming of a blank are realized through U-axis, V-axis, W-axis, E-axis and F-axis coordination.

The pallet type exchange table 2 mainly comprises a primary translation component 21, a rotating component 22, a lifting component 23, a secondary translation component 24 and a pickup component 25;
wherein the primary translation component 21 drives the rotating component 22, the secondary translation component 23 and the pickup component 25 to reciprocate between the additive unit 1 and the subtractive unit 3;
the rotating component 22 drives the secondary translation component 24 and the pickup component 25 to rotate; and
the secondary translation component 24 drives the pickup component 25 to reciprocate between the additive unit, the temporary storage unit 4 and the subtractive unit 3.

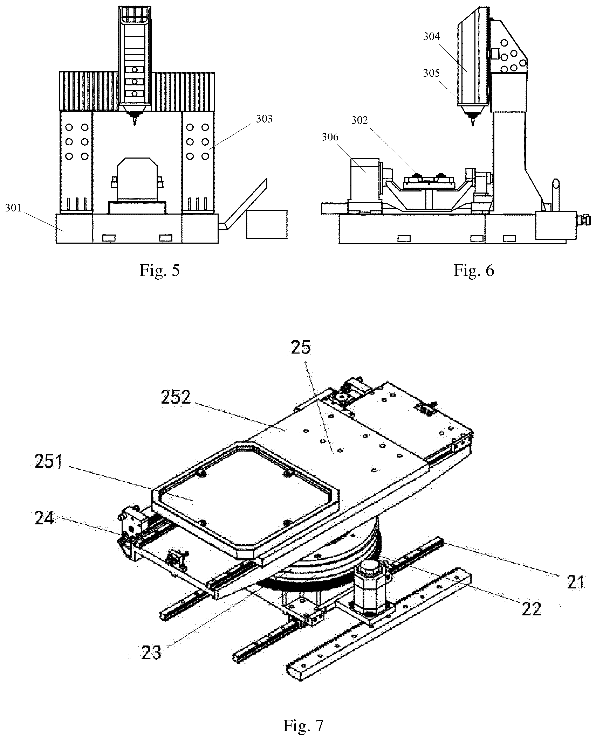

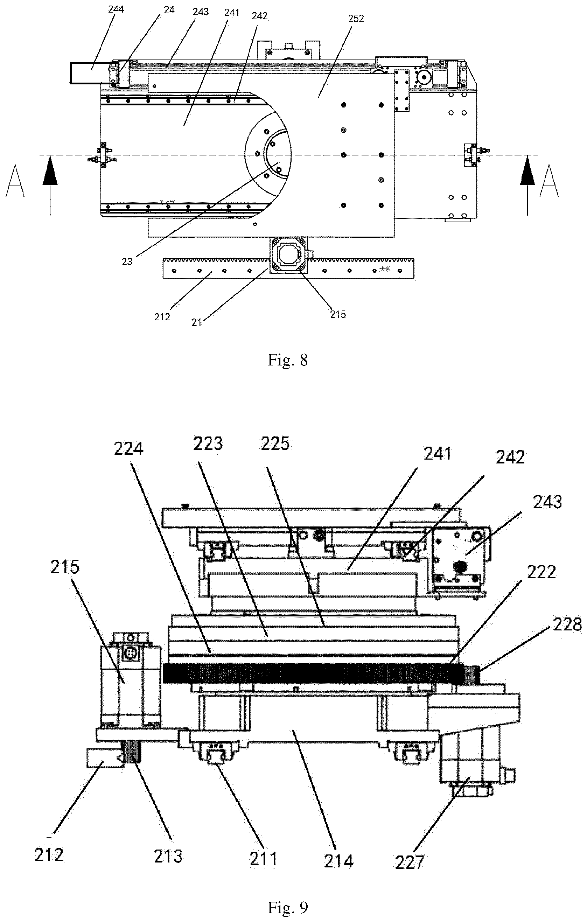

The specific structure is shown in Fig. 7 to Fig. 10:
the primary translation component adopts gear-rack meshing transmission, in combination with a slider-guide rail pair, to realize the translation movement of the rotating component, the secondary translation component and a pallet component; specifically, the primary translation component 21 comprises a first linear guide rail pair 211, a first rack 212, a first gear 213, a base 214 and a first driving motor 215; the base 214 is installed above a slider of the first linear guide rail pair 211, and the first rack 212 is arranged in parallel with the first linear guide rail pair 211; the first driving motor 215 is arranged on a side of the base 214, the first gear 213 is arranged at an output end of the first driving motor 215, and the first gear 213 is meshed with the first rack 212;
the rotating component adopts gear-gear meshing transmission to realize the rotary movement of the secondary translation component and the pallet component; specifically, the rotating component 22 comprises a thrust bearing 221, a rotating gear 222, an upper toothed disc 223, a lower toothed disc 224, an adapter flange 225, guide posts 226, a second driving motor 227 and a second gear 228;
the thrust bearing 221 is fixed above the base 214, and the rotating gear 222 is installed on the thrust bearing 221; the lower toothed disc 224, the upper toothed disc 223 and the adapter flange 225 are sequentially arranged above the rotating gear 222; positioning teeth are uniformly arranged along a circumferential direction on a contacting surface of the lower toothed disc 224 and the upper toothed disc 223 (in fact, both the upper toothed disc and the lower toothed disc are contrate gears, and circumferential positioning accuracy is ensured through the cooperation of the two contrate gears); a plurality of guide posts 226 are uniformly arranged along the circumferential direction, one end of each guide post 226 is fixed on the adapter flange 225, and the other end of each guide post 226 sequentially passes through the upper toothed disc 223, the lower toothed disc 224 and the rotating gear 222 and then extends outwards;
the second driving motor 227 is arranged on a side of the base 214, an output end of the second driving motor 227 is provided with the second gear 228, and the second gear 228 is meshed with the rotating gear 222;
the lifting component adopts hydraulic cylinder-piston to realize the lifting action of the secondary translation component and the pallet component; specifically, the lifting component 23 comprises a hydraulic cylinder 231 and a collision block 232; a cavity for installing the hydraulic cylinder 231 is formed in a center of the base 214, and central through holes are formed in centers of the rotating gear 222, the upper toothed disc 223, the lower toothed disc 224 and the adapter flange 225; one end of the collision block 232 is fixed on the adapter flange 225, and the other end of the collision block 232 is inserted into a central through hole of the adapter flange 225; the hydraulic cylinder 231 is fixed in the cavity, and a piston rod of the hydraulic cylinder 231 sequentially penetrates through the rotating gear 222, the lower toothed disc 224 and the upper toothed disc 223 to make contact with the collision block 232; the secondary translation component 24 comprises a guide rail bracket 241, a second linear guide rail pair 242, a ball screw pair 243 and a third driving motor 244;
the guide rail bracket 241 is fixed on the adapter flange 225, the second linear guide rail pair 242 and the ball screw pair 243 are fixed on the guide rail bracket 241, and the third driving motor 244 drives the ball screw pair 243 so as to drive a slider of the second linear guide rail pair 242 to move; and
the pickup component 25 comprises a clamp positioning pallet 251 and a fork plate 252; and the fork plate 252 is installed on the slider of the second linear guide rail pair 242, a U-shaped notch is formed in the fork plate 252, and the clamp positioning pallet 254 is placed on the fork plate 252 and located above the U-shaped notch.

The movement process of the pallet type exchange table is as follows:
1. workpiece pickup: firstly, the first driving motor 215 drives the base 214 to move on the first linear guide rail pair 211 (i.e., drives the rotating component, the lifting component, the secondary translation component and the pickup component to move along a direction X in Fig. 2), secondly, the second driving motor 227 drives the rotating gear 222, the lower toothed disc 224, the upper toothed disc 223 and the adapter flange 225 to rotate circumferentially (i.e., drives the lifting component, the secondary translation component and the pickup component to rotate circumferentially) in alignment with an operation area, thirdly, the third driving motor 244 drives the ball screw pair 243 to drive the fork plate to move on the second linear guide rail pair 242 (i.e., drives the pickup component to move along a direction X or Y in Fig. 2), and finally, the piston rod of the hydraulic cylinder moves upwards, the upper toothed disc and the adapter flange are pushed up by the collision block (i.e., the secondary translation component and the pickup component are driven to move along a direction Z in Fig. 2), and the upper toothed disc is separated from the lower toothed disc; and
2. workpiece placement: firstly, the first driving motor 215 drives the base 214 to move on the first linear guide rail pair 211 (i.e., drives the rotating component, the lifting component, the secondary translation component, the pickup component and the workpiece to move along the direction X in Fig. 2), secondly, the second driving motor 227 drives the rotating gear 222, the lower toothed disc 224, the upper toothed disc 223 and the adapter flange 225 to rotate circumferentially (i.e., drives the lifting component, the secondary translation component, the pickup component and the workpiece to rotate circumferentially) in alignment with an operation area, thirdly, the third driving motor 244 drives the ball screw pair 243 to drive the fork plate to move on the second linear guide rail pair 242 (i.e., drives the pickup component and the workpiece to move along the direction X or Y in Fig. 2), and finally, the piston rod of the hydraulic cylinder 231 moves downwards, the upper toothed disc 223 and the adapter flange 225 fall back down (i.e., the secondary translation component, the pickup component and the workpiece are driven to move along the direction Z in Fig. 2), and a positioning cone on the positioning base makes contact with the clamp positioning pallet below the workpiece to complete positioning.

It should be emphasized that the pallet type exchange table can also be replaced by a joint robot for workpiece pickup and placement.

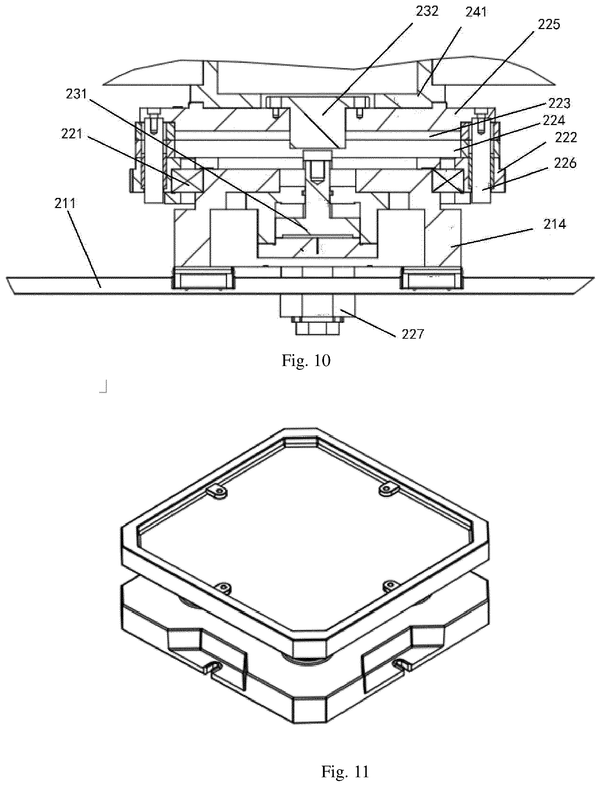

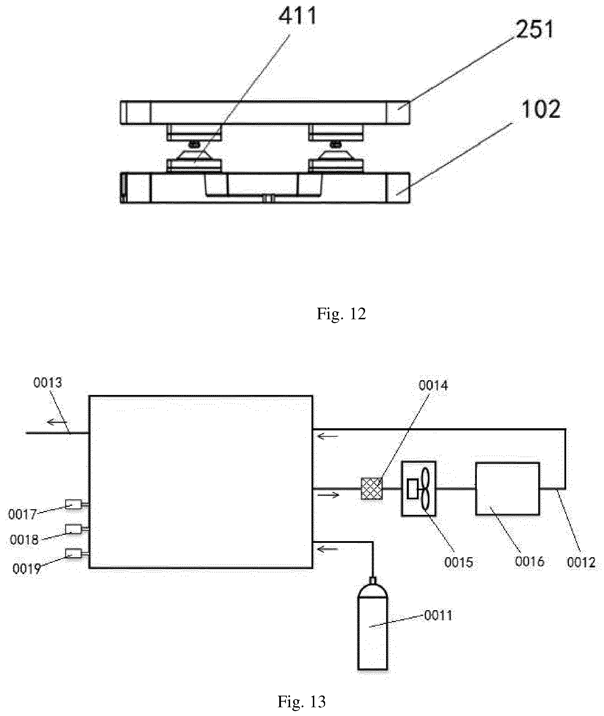

Referring to Fig. 11 and Fig. 12, the pallet component 41 comprises a clamp positioning pallet 251, a positioning base 102 and a positioning cone 411, wherein a workpiece to be processed is installed above the clamp positioning pallet 251, and after the clamp positioning pallet 251 makes contact with the positioning base 102, the workpiece slides along the positioning cone under gravity to complete positioning. Referring to Fig. 13, the first atmosphere adjusting system 011 and the second atmosphere adjusting system 012 have the same structure, and each comprises an inert gas source 0011, a circulation pipeline 0012, an exhaust pipeline 0013, a filter 0014, a fan 0015, a purification column 0016, a pressure sensor 0017, a water content sensor 0018 and an oxygen content sensor 0019.

The pressure sensor 0017, the water content sensor 0018 and the oxygen content sensor 0019 are installed on the first sealing cabin 011 or the second sealing cabin 021, the inert gas source 0011 communicates with the first sealing cabin 011 or the second sealing cabin 021, two ends of the circulation pipeline 0012 communicate with the first sealing cabin 011 or the second sealing cabin 021, and the filter 0014, the fan 0015 and the purification column 0016 are sequentially arranged on the circulation pipeline 0012 along a gas flow direction; and one end of the exhaust pipeline 0013 is connected with the first sealing cabin 011 or the second sealing cabin 021, and the other end of the exhaust pipeline 0013 communicates with the external environment. According to the present invention, a plurality of stations which are hermetically separated from one another and easy to switch are provided, so that the physical isolation of different processing modes is realized, the atmosphere protection of workpieces is independent, and the process conditions of each processing mode are guaranteed.

According to the present invention, the atmosphere protection of the additive area is maintained in a constant state or adjusted according to the required range in normal use, so that waste of time or materials caused by repeated destruction of atmosphere protection in the prior art is avoided, the processing efficiency of the workpieces is improved, and the utilization rate of the device and materials is improved.

Through the combination of the additive unit and the subtractive unit, the integrated application of addition and subtraction can be realized, the concurrent work of the two processing modes is realized, and the utilization rate of time and space for processing the workpieces is greatly improved.

Devices or operating methods that are not defined and illustrated in the present invention are common knowledge in the field.

The above are only embodiments of the present invention, rather than limiting the patent scope of the present invention. Equivalent structures or equivalent flow transformations made by using the contents of the specification and drawings of the present invention, or directly or indirectly applied to other related technical fields, are equally included in the patent protection scope of the present invention.

## Claims

1. An additive and subtractive hybrid manufacturing device, **characterized by** comprising:
an additive area (01), a subtractive area (03) and a workpiece switching area (02); wherein
the additive area (01) comprises a first sealing cabin (011), a first atmosphere adjusting system (012) and an additive unit (1) arranged in the first sealing cabin (011) and used for performing additive processing on workpieces;
the subtractive area (03) comprises a subtractive unit (3) for performing subtractive processing on the workpieces, and the subtractive unit (3) is located in an air environment;
the workpiece switching area (02) comprises a second sealing cabin (021), a second atmosphere adjusting system (022) and a pallet type exchange table (2) arranged in the second sealing cabin (021) and used for transferring the workpieces between the additive unit (1) and the subtractive unit (3);
the first atmosphere adjusting system (012) is used for maintaining an inert gas protection environment in the first sealing cabin (011) all the time, the second atmosphere adjusting system (022) is used for realizing the rapid switching between the inert gas protection environment and the air environment in the second sealing cabin (021);
sealing cabin doors (05) are arranged between the first sealing cabin (011) and the second sealing cabin (021), and between the second sealing cabin (021) and the subtractive area (03); and
the device also comprises a temporary workpiece storage area (04), the temporary workpiece storage area (04) comprises at least one temporary storage unit (4), and a sealing cabin door (05) is arranged between the second sealing cabin (021) and the temporary workpiece storage area (04).

2. The additive and subtractive hybrid manufacturing device according to claim 1, **characterized in that** the pallet type exchange table (2) comprises a primary translation component (21), a rotating component (22), a lifting component (23), a secondary translation component (24) and a pickup component (25);
the primary translation component (21) comprises a first linear guide rail pair (211), a first rack (212), a first gear (213), a base (214) and a first driving motor (215), the base (214) is installed above a slider of the first linear guide rail pair (211), the first rack (212) is arranged in parallel with the first linear guide rail pair (211), the first driving motor (215) is arranged on a side of the base (214), the first gear (213) is arranged at an output end of the first driving motor (215), and the first gear (213) is meshed with the first rack (212);
the rotating component (22) comprises a thrust bearing (221), a rotating gear (222), an upper toothed disc (223), a lower toothed disc (224), an adapter flange (225), guide posts (226), a second driving motor (227) and a second gear (228);
the thrust bearing (221) is fixed above the base (214), the rotating gear (222) is installed on the thrust bearing (221), the lower toothed disc (224), the upper toothed disc (223) and the adapter flange (225) are sequentially arranged above the rotating gear (222), positioning teeth are uniformly arranged along a circumferential direction on a contacting surface of the lower toothed disc (224) and the upper toothed disc (223), a plurality of guide posts (226) are uniformly arranged along the circumferential direction, one end of each guide post (226) is fixed on the adapter flange (225), and the other end of each guide post (226) sequentially passes through the upper toothed disc (223), the lower toothed disc (224) and the rotating gear (222) and then extends outwards;
the second driving motor (227) is arranged on a side of the base (214), an output end of the second driving motor (227) is provided with the second gear (228), and the second gear (228) is meshed with the rotating gear (222);
the lifting component (23) comprises a hydraulic cylinder (231) and a collision block (232), a cavity for installing the hydraulic cylinder (231) is formed in a center of the base (214), and central through holes are formed in centers of the rotating gear (222), the upper toothed disc (223) and the lower toothed disc (224), one end of the collision block (232) is fixed on the adapter flange (225), and the other end of the collision block (232) is inserted into a central through hole of the adapter flange (225), the hydraulic cylinder (231) is fixed in the cavity, and a piston rod of the hydraulic cylinder (231) sequentially penetrates through the rotating gear (222), the lower toothed disc (224) and the upper toothed disc (223) to make contact with the collision block (232);
the secondary translation component (24) comprises a guide rail bracket (241), a second linear guide rail pair (242), a ball screw pair (243) and a third driving motor (244);
the guide rail bracket (241) is fixed on the adapter flange (225), the second linear guide rail pair (242) and the ball screw pair (243) are fixed on the guide rail bracket (241), and the third driving motor (244) drives the ball screw pair (243) so as to drive a slider of the second linear guide rail pair (242) to move; and
the pickup component (25) comprises a clamp positioning pallet (251) and a fork plate (252), the fork plate (252) is installed on the slider of the second linear guide rail pair (242), a U-shaped notch is formed in the fork plate (252), and the clamp positioning pallet (251) is placed on the fork plate (252) and located above the U-shaped notch.

3. The additive and subtractive hybrid manufacturing device according to claim 2, **characterized in that** the first atmosphere adjusting system (012) comprises an inert gas source (0011), a circulation pipeline (0012), an exhaust pipeline (0013), a filter (0014), a fan (0015), a purification column (0016), a pressure sensor (0017), a water content sensor (0018) and an oxygen content sensor (0019);
the pressure sensor (0017), the water content sensor (0018) and the oxygen content sensor (0019) are installed on the first sealing cabin (011), the inert gas source (0011) communicates with the first sealing cabin (011), two ends of the circulation pipeline (0012) communicate with the first sealing cabin (011), and the filter (0014), the fan (0015) and the purification column (0016) are sequentially arranged on the circulation pipeline (0012) along a gas flow direction; one end of the exhaust pipeline (0013) is connected with the first sealing cabin (011), and the other end of the exhaust pipeline (0013) communicates with the external environment; and
the second atmosphere adjusting system (022) and the first atmosphere adjusting system (012) have the same structure.

4. The additive and subtractive hybrid manufacturing device according to claim 3, **characterized in that** the additive unit (1) comprises a CNC machining center, a laser cladding head, a positioning base (102) and a positioning cone (411); the laser cladding head is installed on a ram of the CNC machining center, the positioning base (102) is installed on a workbench of the CNC machining center, and the positioning cone (411) is installed on the positioning base (102); and the laser cladding head adopts a coaxial powder feeding nozzle or inside-laser powder feeding nozzle.

5. The additive and subtractive hybrid manufacturing device according to claim 4, **characterized in that** the subtractive unit (3) comprises a CNC machining center, a workpiece detection head, a positioning base (102) and a positioning cone (411); the positioning base (102) is installed on a workbench of the CNC machining center, and the positioning cone (411) is installed on the positioning base (102); and the workpiece detection head is used to detect whether a workpiece is satisfactory.

6. The additive and subtractive hybrid manufacturing device according to claim 5, **characterized in that** the temporary storage unit (4) comprises a support frame and a pallet component arranged above the support frame, the pallet component comprises a positioning base (102), a positioning cone (411) and a clamp positioning pallet (251), the positioning base (102) is fixedly installed on the support frame, and the clamp positioning pallet (251) is located above the positioning base (102) and connected and positioned through the positioning cone (411).

7. The additive and subtractive hybrid manufacturing device according to claim 6, **characterized in that** a chip removal device and a cooling device are arranged in the subtractive unit (3), and a powder recovering device for recovering metal powder is arranged in the additive unit (1).

8. The additive and subtractive hybrid manufacturing device according to claim 1, **characterized in that** the volume of the first sealing cabin (011) is larger than that of the second sealing cabin (021).

9. An additive and subtractive hybrid manufacturing method based on the additive and subtractive hybrid manufacturing device according to claim 1, **characterized by** comprising the following steps:
[1] feeding:
placing a workpiece to be processed on the temporary storage unit (4);
[2] workpiece pickup:
opening the sealing cabin door (05) arranged between the second sealing cabin (021) and the temporary workpiece storage area (04), picking up the workpiece to be processed from the temporary storage unit (4) to the pallet type exchange table (2) through the pallet type exchange table (2), and closing the sealing cabin door (05) between the second sealing cabin (021) and the temporary workpiece storage area (04);
[3] additive processing:
[3.1] opening the sealing cabin door (05) between the first sealing cabin (011) and the second sealing cabin (021), transferring the workpiece to be processed to a workbench of the additive unit (1) through the pallet type exchange table (2), and then closing the sealing cabin door (05) between the first sealing cabin (011) and the second sealing cabin (021);
[3.2] atmosphere adjustment of the additive unit (1):
introducing, by the first atmosphere adjusting system (012), inert gas into the first sealing cabin (011) and performing purification and circulation, so as to enable the first sealing cabin (011) to be in the inert gas environment;
[3.3] performing additive processing on the workpiece to be processed by means of the additive unit (1);
[4] primary atmosphere adjustment of a station switching unit:
after the additive process, adjusting the gas environment in the second sealing cabin (021) through the second atmosphere adjusting system (022) to make the environment consistent with the inert gas environment in the first sealing cabin (011);
[5] station switching:
opening the sealing cabin door (05) between the first sealing cabin (011) and the second sealing cabin (021), picking up the workpiece subjected to additive processing to the pallet type exchange table (2) through the pallet type exchange table (2), and closing the sealing cabin door (05) between the first sealing cabin (011) and the second sealing cabin (021) again;
[6] secondary atmosphere adjustment of the station switching unit:
adjusting the environment in the second sealing cabin (021) by the second atmosphere adjusting system (022) to make the environment consistent with the air environment;
[7] subtractive process:
opening the sealing cabin door (05) between the second sealing cabin (021) and the subtractive area (03), transferring the workpiece subjected to additive processing on the pallet type exchange table (2) to a workbench of the subtractive unit (3) through the pallet type exchange table (2), then closing the sealing cabin door (05) between the second sealing cabin (021) and the subtractive area (03), and performing subtractive processing on the workpiece by the subtractive unit (3);
[8] checking whether the workpiece is satisfactory, executing step [9] if yes, and
repeating step [7] if not till the workpiece is satisfactory and then executing step [9], or executing step [10] till the workpiece is satisfactory and then executing step [9];
[9] opening the sealing cabin door (05) between the second sealing cabin (021) and the subtractive area (03), and transferring the workpiece subjected to subtractive processing on the workbench of the subtractive unit (3) to the pallet component of the temporary storage unit (4) through the pallet type exchange table (2) to complete processing;
[10] opening the sealing cabin door (05) between the second sealing cabin (021) and the subtractive area (03), transferring the workpiece subjected to subtractive processing on the workbench of the subtractive unit (3) to the pallet type exchange table (2) through the pallet type exchange table (2), and closing the sealing cabin door (05) between the second sealing cabin (021) and the subtractive area (03);
adjusting the gas environment in the second sealing cabin (021) again by the second atmosphere adjusting system (022) to make the environment consistent with the inert gas environment in the first sealing cabin (011);
opening the sealing cabin door (05) between the first sealing cabin (011) and the second sealing cabin (021), transferring the workpiece subjected to subtractive processing to the workbench of the additive unit (1), then closing the sealing cabin door (05) between the first sealing cabin (011) and the second sealing cabin (021), and performing additive processing on the workpiece by the additive unit (1); and
executing the steps [4] to [7] again till the workpiece is satisfactory and then executing the step [9].
